# EUROPÄISCHE PATENTANMELDUNG

(11) **EP 4 325 533 A1**
(43) Veröffentlichungstag der Anmeldung: **21.02.2024**
(21) Anmeldenummer: 22191339.5
(22) Anmeldetag: 19.08.2022
(51) Int. Cl.: H01F 41/02, B32B 15/01

(54) **VERFAHREN ZUM PAKETIEREN VON BLECHTEILEN AUS EINEM ELEKTROBAND ODER -BLECH ZU EINEM BLECHPAKET**

(71) Anmelder: voestalpine Stahl GmbH, 4020 Linz (AT)
(72) Erfinder: Fluch, Ronald, 4020 Linz (AT)
(74) Vertreter: Jell, Friedrich

(57) **Zusammenfassung**

Es wird ein Verfahren zum Paketieren von Blechteilen (4) aus einem Elektroband (3) oder -blech zu einem Blechpaket (2) gezeigt.

## Beschreibung

Die Erfindung betrifft Verfahren zum Paketieren von Blechteilen aus einem Elektroband oder -blech zu einem Blechpaket, bei dem die Blechteile, welche auf mindestens einer ihrer Flachseiten eine Schmelzklebelackschicht, insbesondere Backlackschicht, aufweisen, aufeinandergestapelt werden, die Schmelzklebelackschichten der aufeinandergestapelten Blechteile erwärmt und bei einer ersten Temperatur, welche erste Temperatur größer der Glasübergangstemperatur des Schmelzklebelacks der Schmelzklebelackschichten und kleiner der Verbackungstemperatur des Schmelzklebelacks der Schmelzklebelackschichten liegt, in axialer Richtung der aufeinandergestapelten Blechteile unter Druck gesetzt werden, und nachfolgend die Schmelzklebelackschichten der Blechteile auf eine zweite Temperatur, die größer gleich der Verbackungstemperatur des Schmelzklebelacks ist, enderwärmt und damit die Blechteile miteinander verbacken werden.

Bei der Herstellung von Blechpaketen aus mit einer Schmelzklebeschicht beschichteten Blechteilen ist es bekannt (WO2021175875A1), das Blechpaket und damit die Schmelzklebelacksicht beim Verkleben der Blechteile in axialer Richtung unter Druck zu setzen, um damit eine gewünschte Pakethöhe sicherzustellen. Neben einer exakten Pakethöhe ist zudem auch eine vollflächige Verklebung zwischen den Blechteilen notwendig - dies insbesondere, wenn vom Blechpaket eine Druckbeständigkeit bei Flüssigkeitskühlung gefordert wird - was insbesondere bei Blechpaketen im Hochleistungsbereich, beispielsweise bei Elektromotoren, der Fall ist.

Die Erfindung hat sich daher die Aufgabe gestellt, ein Verfahren zur Herstellung eines Blechpakets der eingangs geschilderten Art derart weiterzuentwickeln, dass mit erhöhter Reproduzierbarkeit ein gegenüber Flüssigkeitskühlung beständiges Blechpaket hergestellt werden kann. Zudem soll das Verfahren einfach handhabbar sein und keinen erhöhten Mehraufwand bedürfen.

Die Erfindung löst die gestellte Aufgabe durch die Merkmale des Anspruchs 1.

Werden beim unter Druck Setzen der Schmelzklebelackschichten in axialer Richtung der aufeinandergestapelten Blechteile diese mehrmals durch einen Druckimpuls unter Druck gesetzt, können deren Grenzflächeneigenschaften auf einen vollflächigen Verklebung vorbereitet werden. Dies auch dann, wenn Temperaturunterschiede an der Schmelzklebelackschicht bestehen. Außerdem ist vorstellbar, dass durch den Druckimpuls selbst Unterschiede bei der Fließeigenschaft der Schmelzklebelackschichten überwunden werden - was die vollflächige Anbindung zwischen den Blechteilen durch Ausbildung einer homogeneren Grenzschicht weiter begünstigen kann. Beispielsweise kann hierfür zur Ausübung des Druckimpulses eine Beaufschlagung mit Impulsdruck erfolgen oder eine Entlastung mit Impulsdruck erfolgen.

Das Verfahren ermöglicht damit, reproduzierbar einen flüssigkeitsdichten Anschluss zwischen den Blechteilen herzustellen, der überraschend selbst besonders hohen hydraulischen Drücken standhält. Auch bedarf es für die Druckänderungen auf das Blechpaket in Form von Druckimpulsen keiner weiteren oder aufwendigen Handhabungsschritte, wodurch das Verfahren einfach durchführbar bleibt - und im Vergleich zu anderen Verfahren mit einem Druckbeaufschlagen des Blechpakets beim Verbacken auch keinen erhöhten Mehraufwand verursacht.

Die Handhabung des Verfahrens kann unter anderem vereinfacht werden, wenn zur Ausübung des Druckimpulses jeweils eine Beaufschlagung mit Impulsdruck und nachfolgend eine zumindest teilweise Entlastung von Impulsdruck, insbesondere vom im Wesentlichen gesamten Impulsdruck, erfolgt. Vorzugsweise erfolgt eine gesamte Entlastung von Impulsdruck.

Das Verfahren kann weiter verbessert werden, wenn während der nachfolgenden Entlastung vom Impulsdruck die Schmelzklebelackschichten im Wesentlichen frei vom Druck sind.

Vorzugsweise ist dieser Verfahrensschritt der Impulsbelastung zeitlich vergleichsweise kurz gehalten, indem die Zeitdauer der Beaufschlagung mit Impulsdruck und/oder die nachfolgende Entlastung von Impulsdruck im Bereich von 0,1 bis 20 Sekunden liegt. Dies insbesondere, wenn diese Zeitdauer im Bereich von 0,5 bis 5 Sekunden liegt. Auf diese Weise kann beispielsweise die Gefahr eines Ausquetschens von Schmelzklebelack aus dem Klebespalt zwischen den Blechteilen gering gehalten werden. Vorzugsweise ist die Zeitdauer für die Beaufschlagung mit Impulsdruck gleich der Zeitdauer für die nachfolgende Entlastung von Druck.

Beispielsweise beaufschlagt der Druckimpuls die Schmelzklebelackschichten im Bereich von 0,5 bis 10 N/mm² (Newton pro Quadratmillimeter). Vorzugsweise beaufschlagt der Druckimpuls die Schmelzklebelackschichten mit Impulsdruck im Bereich von 2 bis 6 N/mm², um auch damit die Gefahr eines Ausquetschens von Schmelzklebelack aus dem Klebespalt zwischen den Blechteilen gering zu halten.

Einfache Verfahrensbedingungen können sich ergeben, wenn die erste Temperatur im Bereich von 80 bis 220 °C liegt. Vorzugsweise liegt die erste Temperatur im Bereich von 80 bis kleiner 180 °C. Liegt die erste Temperatur im Bereich von 100 bis 150 °C, kann beispielsweise eine Gefahr eines Ausquetschens von Schmelzklebelack aus dem Klebespalt zwischen den Blechteilen gering gehalten werden.

Erfolgt das mehrmals durch den Druckimpuls unter Druck Setzen direkt nacheinander, kann damit die Homogenisierung der Grenzflächeneigenschaften weiter verbessert werden. Dies umso mehr, wenn das mehrmals durch den Druckimpuls unter Druck Setzen periodisch erfolgt.

Als vorteilhaft kann sich weiter herausstellen, wenn die Schmelzklebelackschichten in einem ersten Zeitdauerabschnitt eines Druckverlaufs mehrmals durch den Druckimpuls und in mindestens einem anderen Zeitdauerabschnitt des Druckverlaufs durch einen konstanten Druck unter Druck gesetzt werden. Vorzugsweise ist der andere Zeitdauerabschnitt um das Zwei- bis Vierfache länger als der erste Zeitdauerabschnitt.

Vorzugsweise ist die Länge des anderen Zeitdauerabschnitts im Bereich von 0,5 bis 180, insbesondere von 60 bis 120, Sekunden.

Beispielsweise kann davon die Länge eines anderer zweiten Zeitdauerabschnitts im Bereich von 0,5 bis 120 Sekunden liegen, insbesondere 60 Sekunden betragen.

Beispielsweise kann davon die Länge eines anderer dritten Zeitdauerabschnitts im Bereich von 30 bis 180 Sekunden liegen, insbesondere 120 Sekunden betragen. Vorzugsweise liegt zeitlich gesehen der zweite Zeitdauerabschnitt vor dem dritten Zeitdauerabschnitt. Beispielsweise kann der erste Zeitdauerabschnitt zwischen dem anderen zweiten und dem anderen dritten Zeitdauerabschnitt liegen.

Es ist vorstellbar, dass die Schmelzklebelackschichten mehrmals durch den Druckimpuls derart unter Druck gesetzt werden, dass unter Vermeidung eines Ausquetschens von Klebstoff aus den Klebefugen zwischen den Blechteilen eine vollflächige Verklebung erfolgt.

Einfache Verfahrensbedingungen können sich ergeben, wenn die zweite Temperatur im Bereich von 180 °C bis 250 °C, insbesondere von 180 °C bis 220 °C, liegt.

Vorzugsweise werden Blechteile aufeinandergestapelt, die auf beiden ihrer Flachseiten die Schmelzklebelackschicht, insbesondere Backlackschicht, aufweisen. Damit kann beispielsweise die Beständigkeit des Blechpakets gegenüber einer Flüssigkeitskühlung weiter erhöht werden, da sich die Anbindung auf eine Verbindungsfläche zwischen zwei ähnlich Fügepartnern reduziert. Zudem kann der Druckimpuls auf die beiden viskosen Schmelzklebelackschichten gleichzeitig Einfluss nehmen, was die Verbindung zwischen diese und damit den Blechteilen weiter verbessern kann.

Vorzugsweise beträgt die Dicke jedes Blechteils zwischen 0,09 und 0,49 mm, insbesondere 0,09 bis 0,29 mm, und/oder beträgt die Dicke der Schmelzklebelackschicht jedes Blechteils zwischen 2 und 12 µm, insbesondere von 4 bis 8 µm. Damit sind besonders vorteilhafte Voraussetzungen für eine hohe Reproduzierbarkeit des Verfahrens erreichbar.

Im Verfahren ist beispielsweise vorstellbar, dass das unter Druck Setzen an einem, vorzugsweise vorverklebten, Blechpaket erfolgt. Dies, indem die Blechteile in einer Stapeleinrichtung gestapelt, nach Verlassen der Stapeleinrichtung in Form eines, insbesondere vorverklebten, Blechpakets deren Schmelzklebelackschichten in einer Druckeinrichtung mehrmals durch den Druckimpuls unter Druck gesetzt werden und nachfolgend enderwärmt werden.

Alternativ ist vorstellbar, dass unter Vermeidung der Verwendung eines vorverklebten Blechpakets in einer Druckeinrichtung folgende Verfahrensschritte erfolgen: Stapeln einzelner Blechteile zu einem Blechpaket, Erwärmung deren Schmelzklebelackschichten, mehrmals durch den Druckimpuls unter Druck Setzen und gegebenenfalls nachfolgend Enderwärmen.

In den Figuren ist beispielsweise der Erfindungsgegenstand anhand einer Ausführungsvariante näher dargestellt. Es zeigen
- Fig. 1: eine schematische Darstellung einer Vorrichtung zur Durchführung des erfindungsgemäßen Verfahrens,
- Fig. 2: einen Druckverlauf, mit welchem ein vorverklebtes Blechpaket aus Fig. 1 in seiner axialen Richtung unter Druck gesetzt wird,
- Fig.3a: eine Schnittansicht auf einen Klebespalt zwischen zwei Blechteilen des nach Fig. 2 noch nicht unter Impulsdruck gesetzten Blechpakets,
- Fig.3b: eine Schnittansicht auf einen Klebespalt zwischen zwei Blechteilen nach dem nach Fig. 2 unter Impulsdruck Setzen der Schmelzklebelackschichten und
- Fig. 4: eine alternative Vorrichtung zur Durchführung des erfindungsgemäßen Verfahrens.

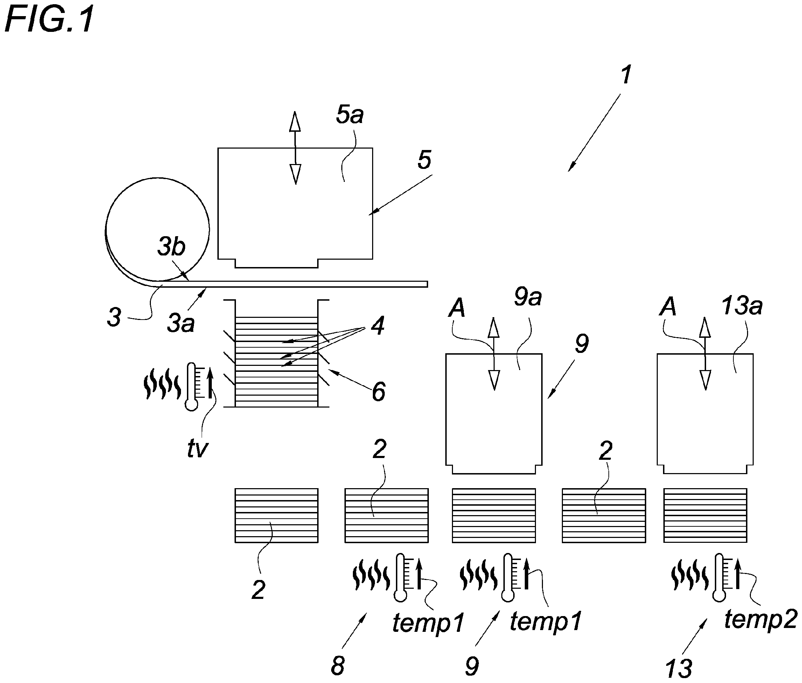

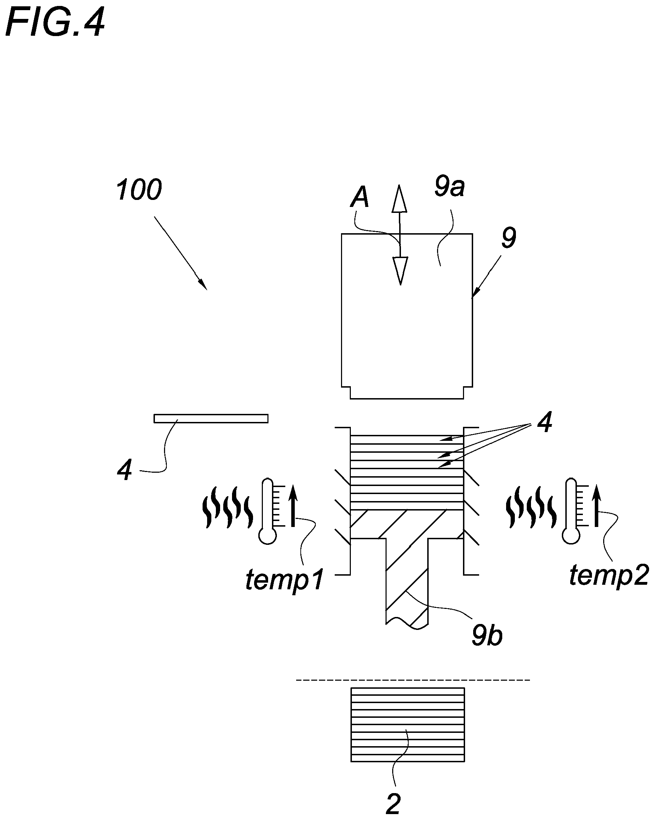

Nach den Figuren 1 und 4 sind Vorrichtungen 1, 100 dargestellt, mit denen ein Blechpaket 2 hergestellt wird, welches vorzugsweise für elektromagnetische Bauteile, beispielsweise für elektrische Maschinen, verwendet wird.

Hierzu werden durch eine erste Vorrichtung 1 - siehe in Fig. 1 - aus einem Elektroband 3 mehrere Blechteile 4 abgetrennt. Das Elektroband 3 ist auf beiden Flachseiten 3a, 3b mit thermohärtbaren Schmelzklebelackschicht 7, beispielsweise aufweisend eine Epoxydharzbasis und Dicyandiamid als Vernetzer, beschichtet. Die thermohärtbare bzw. heißhärtende Schmelzklebelackschichten 7 können aus Backlack bestehen. Beispielsweise kann auch ein katalysierter Backlack Anwendung finden, etwa Backlack mit Depotbeschichtung zur rascheren Ausreaktion.

Der Schmelzklebelack 7a bzw. die Schmelzklebelackschicht 7 befindet sich im B-Zustand, wobei die Glasübergangstemperatur Tg des beispielsweise verwendeten Schmelzklebelacks 7a im Bereich von 65 bis 85 °C (Grad Celsius), gemessen nach ISO 11357-2, liegt. Die Verbackungstemperatur des beispielsweise verwendeten Schmelzklebelacks 7a liegt im Bereich größer gleich 180 Grad. Diese Kennwerte zur Glasübergangstemperatur und Verbackungstemperatur können aber entsprechend dem verwendeten Schmelzklebelack 7a variieren.

Die Abtrennung der Blechteile 4 erfolgt mit einem Stanzwerkzeug 5, das auch Teil eines nicht dargestellten Folgestanzwerkzeugs sein kann. Andere Einrichtungen zur Abtrennung von Blechteilen 4, beispielsweise mit Laser, sind vorstellbar. Vorzugsweise beträgt die Dicke jedes Blechteils 4 zwischen 0,09 und 0,49 mm (Millimeter), nämlich 0,24 mm, und die Dicke jeder Schmelzklebelackschicht 7 zwischen 2 und 12 µm (Mikrometer), nämlich 5 µm. Dies gilt auch für das Elektroband 3, von dem das Blechteil 4 stammt. Damit ergibt sich eine Dicke für jede einzelne Lamelle am Blechpaket 2 im Bereich von 0,1 und 0,5 mm.

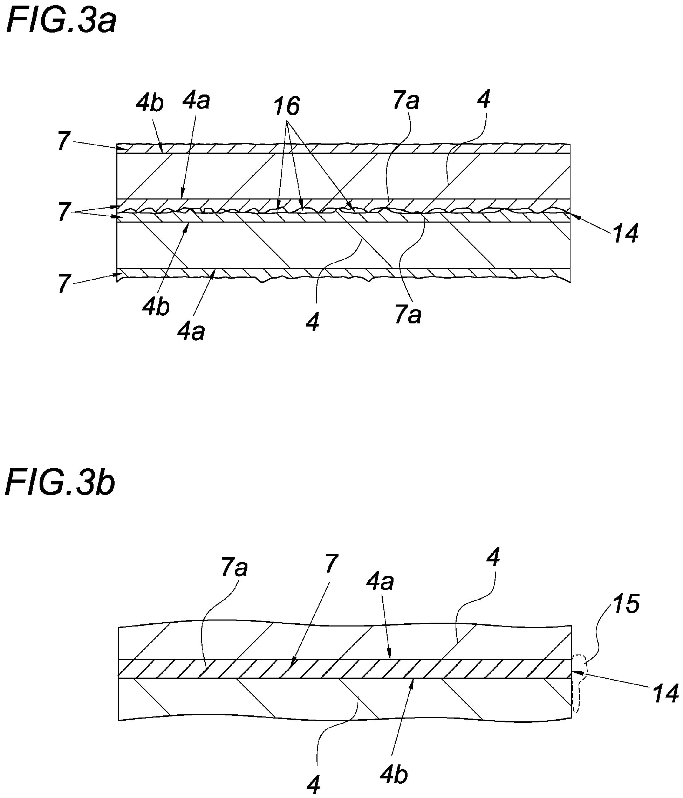

Die Blechteile 4 werden vom Stanzstempel 5a des Stanzwerkzeugs 5 in eine Stapeleinrichtung 6 gedrängt. In dieser Stapeleinrichtung 6 werden die Blechteile 4, welche auf mindestens einer ihrer Flachseiten 4a eine Schmelzklebelackschicht 7, nämlich Backlackschicht, aufweisen, aufeinandergestapelt. Im Ausführungsbeispiel -wie in Fig. 3a auch zu erkennen, weisen die Blechteile 4 auf beiden ihrer Flachseiten 4a, 4b diese Schmelzklebelackschicht 7 auf.

Die Stapeleinrichtung 6 werden die Schmelzklebelackschicht 7 auf eine Temperatur tv gebracht, die über einer Glasübergangstemperatur Tg deren Schmelzklebelacks 7a liegt, nämlich auf eine Temperatur tv bei 100 °C (100 Grad Celsius). Zudem werden die Schmelzklebelackschichten 7 mit einem Druck in der Höhe von 3 N/mm² (Newton pro Quadratmillimeter) für 30 Sekunden belastet. Damit werden die Blechteile 4 zu einem Blechpaket 2 vorverklebt.

Alle aufeinandergestapelten Blechteile 4 verlassen die Stapeleinrichtung 6 als vorverklebte Blechpakete 2 bzw. werden beim oder nach dem Verlassen der Stapeleinrichtung 6 in vorverklebte Blechpakete 2 getrennt - was nicht dargestellt ist.

Diese vorverklebte Blechpakete 2 werden danach weiteren Verfahrensschritten unterworfen - und zwar wird das Blechpaket 2 in einen ersten Ofen 8 eingebracht, um damit die Schmelzklebelackschichten 7 der aufeinandergestapelten Blechteile 4 auf eine erste Temperatur temp1 zu bringen, welche über einer Glasübergangstemperatur Tg deren Schmelzklebelacks 7a und unterhalb der Verbackungstemperatur deren Schmelzklebelacks 7a liegt, vorerwärmt.

Es ist aber vorstellbar, was nicht näher dargestellt worden ist, dass die Blechteile 2 in der Stapeleinrichtung 6 noch vor dem Verlassen auf diese erste Temperatur temp1 gebracht werden - was den Verfahrensschritt mit dem ersten Ofen 8 hinfällig macht.

In einem weiteren Schritt, nachdem das Blechpaket 2 die Stapeleinrichtung 6 verlassen hat, wird dieses in eine Druckeinrichtung 9 eingebracht, welche Druckeinrichtung 9 mit einem Presstempel 9a auf dieses Blechpaket 2 eine axiale Druckkraft P ausübt - also in axiale Richtung A des Blechpakets 2, welche Richtung A parallel zur Stapelrichtung der aufeinandergestapelten Blechteile 4 verläuft. Zwei dieser aufeinandergestapelten Blechteilen 4 sind in Fig. 3a zu erkennen.

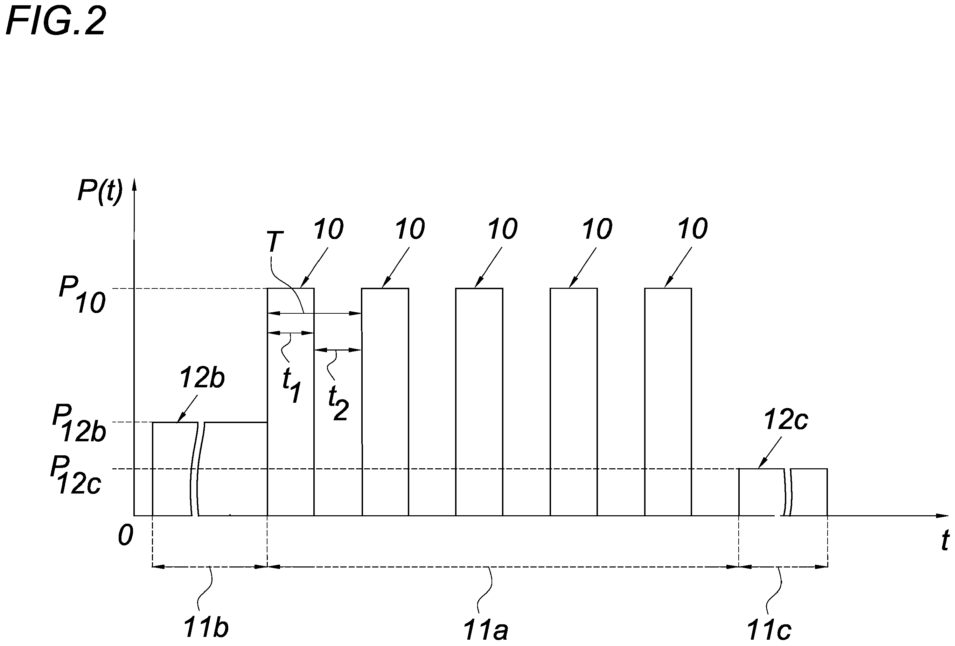

Dies erfolgt auf besondere Weise - siehe Druck P bzw. Druckkraft P(t) in Fig.1 in Verbindung mit Fig. 2. So ist in Fig. 2 zu erkennen, dass das vorverklebte Blechpaket 2 in seiner axialen Richtung A mehrmals, im Ausführungsbeispiel fünfmal, durch einen Druckimpuls 10 einzeln unter Druck gesetzt wird, indem eine Beaufschlagung mit Impulsdruck P₁₀ und nachfolgender Entlastung von Druck P erfolgt. Dadurch ergibt sich eine periodische Impulsfolge.

Die Entlastung entspricht nach dem Ausführungsbeispiel 2 dem beaufschlagten Impulsdruck P₁₀, wobei denkbar ist, dass ein Rest des Impulsdrucks P₁₀ bleibt.

Im Druckverlauf P(t) nach Fig.2 zu erkennen, ist durch die nachfolgende Entlastung die Schmelzklebelackschichten 7 im Wesentlichen frei vom Druck P.

Der dargestellte Druckimpuls 10 folgt im Wesentlichen einem rechteckförmigen Verlauf, wie in Fig. 2 beispielsweise ideal dargestellt zu erkennen. Vorzugsweise weist der Druckimpuls 10 eine unipolare Impulsform auf.

Durch diesen Impulsdruck P₁₀ werden zuverlässig Unebenheiten ausgeglichen. Dies selbst dann, wenn aufgrund von Temperaturunterschieden an dem jeweiligen Blechteil 4 eine inhomogen Fließeigenschaft des Schmelzklebstoffs über die gesamte Anbindungsfläche besteht. Der Druckimpuls 10 kann erfindungsgemäß diese Inhomogenitäten überwinden und damit besonders reproduzierbar gegenüber Flüssigkeitskühlung beständige Blechpakete 2 herstellen. Ganz besonders wirksam ist dieser Impulsdruck P₁₀ in der Anbindung des Schmelzklebelacks 7a der Schmelzklebelackschicht 7 an einer Flachseite 4a des Blechteils 4 an einen Schmelzklebelack 7a der Schmelzklebelackschicht 7 an der Flachseite 4b eines daran anschließenden anderen Blechteils 4 zu erfolgen hat, wie in den Figuren 3a und 3b dargestellt.

Aber auch eine Anbindung des Schmelzklebelacks 7a der Schmelzklebelackschicht 7 an ein blankes Blechteil 4 kann damit verbessert werden, was nicht näher dargestellt worden ist.

Wie in der Fig. 2 weiter dargestellt, wird das vorverklebte Blechpaket in seiner axialen Richtung A in einem ersten Zeitdauerabschnitt 11a eines Druckverlaufs P(t) fünf direkt nacheinander durch den Druckimpuls 10 mit unipolarer Impulsform unter, im Ausführungsbeispiel jeweils gleich hohen, Impulsdruck P₁₀ gesetzt, was periodisch mit der Periodendauer T von erfolgt. Vorzugsweise ist bei einer Entlastung mit dem Impulsdruck P₁₀ das Blechpaket 2 druckfrei - es ist aber auch vorstellbar, dass der Druckimpuls 10 mit einer konstanten Druckkraft überlagert wird, sodass auch bei Entlastung mit dem Impulsdruck P₁₀ noch eine Druck P auf die Schmelzklebelackschichten 7 wirken, was nicht näher dargestellt worden ist.

Zur Erzeugung des Druckimpuls 10 belastet die Presse 9 das Blechpaket 2 mit einem Druck P in der Höhe P₁₀ bzw. mit dem Impulsdruck P₁₀ im Bereich von 0,5 bis 20 N/mm², nämlich 5 N/mm². Diese Beaufschlagung mit Druck P und Entlastung von diesem Druck P erfolgt mit einer gleichen Dauer t₁ bzw. t₂, was eine Periode T im Bereich von 0,1 bis 20 sec, nämlich 2 Sekunden, ergibt.

Bei diesem Verfahrensschritt weist der Schmelzklebelack eine erste Temperatur temp1 im Bereich von 80 bis 220 °C, nämlich 120 °C, auf.

Aufgrund steuerungs- oder regelungstechnischer Mindestanforderungen kann nach der Entlastung mit Impulsdruck P₁₀ ein vergleichsweise minimaler Druck P in der Höhe von 0,1 N/mm² wirken, was nicht näher dargestellt worden ist, was beispielsweise eine im Wesentlichen gesamte Entlastung mit Impulsdruck P₁₀ darstellen kann.

Der Impulsdruck P₁₀ kann ausreichen, eine vollständige Anbindung der beiden Schmelzklebelackschichten 7 aneinander zu erreichen, um damit die freien Bereiche 16 zwischen den Schmelzklebelackschichten 7 zu beheben, wie in Fig. 3a erkennbar. Auch ist damit die Anbindung der Blechteile 4 untereinander erheblich verbesserbar, was wiederum die Standfestigkeit der, durch das erfindungsgemäße Verfahren hergestellten Blechpakete 2 weiter erhöht.

In einem optionalen zweiten Zeitabschnitt 11b des Druckverlaufs P(t) wird das Blechpaket 2 mit konstantem Druck 12b unter Druck gesetzt, und zwar in der Höhe P_{12b} im Bereich von 2 bis 10 N/mm², nämlich 2 N/mm² für 60 Sekunden. Der zweite Zeitabschnitt 11b befindet sich zeitlich gesehen vor dem ersten Zeitabschnitt 11a.

In einem optionalen dritten Zeitabschnitt 11c des Druckverlaufs P(t) wird das Blechpaket 2 mit einem konstanten Druck 12c unter Druck P gesetzt, und zwar in der Höhe P_{12c} im Bereich von 0,5 bis 10 N/mm², nämlich 1 N/mm² für 120 Sekunden. Der dritte Zeitabschnitt 11c befindet sich zeitlich gesehen nach dem ersten Zeitabschnitt 11a.

Auch wird - wie in Fig. 1 zu erkennen - das Blechpaket 2 bzw. deren Schmelzklebelackschicht 7 während des Pressens auf der ersten Temperatur temp1 gehalten. Auch werden die erwähnten drei Zeitabschnitte11b, 11a, 11c von der Druckeinrichtung 9 durchgeführt.

Nachfolgend werden die Blechteile 4 zu einem Blechpaket 2 verbacken bzw. damit der Schmelzklebelack 7a in den C-Zustand übergeführt. Dafür wird das Blechpaket 2 in einen zweiten Ofen 13 eingebracht und dort die Schmelzklebelackschichten 7 des Blechpakets 2 auf eine zweite Temperatur temp2, die größer gleich der Verbackungstemperatur des Schmelzklebelacks 7a der Schmelzklebelackschichten 7 ist, enderwärmt, um die Blechteile 4 unter konstantem Druck in axialer Richtung A der aufeinandergestapelten Blechteile, ausgeübt von einem einen Ofenstempel 13a, miteinander bei ausreichend langer Verbackungszeit verbacken. Beispielsweise liegt die zweite Temperatur temp2 bei 200 °C (200 Grad Celsius), die Verbackungszeit bei 1 Minute bei einer Druckbelastung auf das Blechpaket von 0,3 N/mm².

Das erfindungsgemäße Verfahren ist daher äußerst flexibel und stellt mit hoher Reproduzierbarkeit druckbeständige Blechpakete 2 her - dies unter Vermeidung eines Ausquetschens von Klebstoff aus einer jeweiligen Klebefuge 14 zwischen den Blechteilen 4. Dadurch ist auch nicht mit Bildung eines Tropfens 15 - in Fig. 3b als Strichline - außerhalb der Klebefuge 14 zu rechnen.

Mit solch einem Ausquetschen von Klebstoff ist beispielsweise zu rechnen, wenn das Blechpaket 2 gemäß dem Stand der Technik unmittelbar nach dem Aufeinanderstapeln der Blechteile 4 auf eine Temperatur von 200 Grad Celsius, mit einer Verbackungszeit bei 1 Minute und unter einer Druckbelastung von 3 N/mm² verbacken wird, um damit auch solche eine Druckbeständigkeit gewährleisten zu können.

Eine alternative Vorrichtung 100 ist in Fig. 4 dargestellt. Hier erfolgen alle Verfahrensschritte zur Herstellung eines Blechpakets 2 aus Blechteilen 4 in einer Druckeinrichtung 9.

Zuerst werden einzelne Blechteile 4 zu einem Blechpaket 2 gestapelt. Die Blechteile können beispielsweise von einer nicht näher dargestellten Stanzeinrichtung stammen.

Dann werden die Schmelzklebelackschichten 7 auf die erste Temperatur temp1 erwärmt und unter Druck P gesetzt, und zwar mit dem Presstempel 9a und einem Gegenhalter 9b. Das mehrmals durch einen Druckimpuls (10) unter Druck (P) Setzen erfolgt wie zu Fig. 2 beschrieben.

Nachfolgend werden die Schmelzklebelachschichten 7 verbacken und damit in den Zustand C übergeführt, indem die Schmelzklebelackschichten 7 auf eine Temperatur temp2 erwärmt werden. Auch hier werden die Parameter gleichwie zum zweiten Ofen 13 nach Fig. 1 beschrieben eingestellt.

## Patentansprüche

1. Verfahren zum Paketieren von Blechteilen (4) aus einem Elektroband (3) oder -blech zu einem Blechpaket (2), bei dem
die Blechteile (4), welche auf mindestens einer ihrer Flachseiten (4a, 4b) eine Schmelzklebelackschicht (7), insbesondere Backlackschicht, aufweisen, aufeinandergestapelt werden,
die Schmelzklebelackschichten (7) der aufeinandergestapelten Blechteile (4) erwärmt und bei einer ersten Temperatur (temp1), welche erste Temperatur (temp1) größer der Glasübergangstemperatur (Tg) des Schmelzklebelacks (7a) der Schmelzklebelackschichten (7) und kleiner der Verbackungstemperatur des Schmelzklebelacks (7a) der Schmelzklebelackschichten (7) liegt, in axialer Richtung (A) der aufeinandergestapelten Blechteile (4) unter Druck (P) gesetzt werden,
und nachfolgend die Schmelzklebelackschichten (7) der Blechteile (4) auf eine zweite Temperatur (temp2), die größer gleich der Verbackungstemperatur des Schmelzklebelacks (7a) ist, enderwärmt und damit die Blechteile (4) miteinander verbacken werden,
**dadurch gekennzeichnet, dass**
beim unter Druck (P) Setzen der Schmelzklebelackschichten (7) in axialer Richtung (A) der aufeinandergestapelten Blechteile (4) diese mehrmals durch einen Druckimpuls (10) unter Druck (P) gesetzt werden, indem zur Ausübung des Druckimpulses (10) eine Beaufschlagung mit Impulsdruck (P₁₀) oder eine Entlastung von Impulsdruck (P₁₀) erfolgt.

2. Verfahren nach Anspruch 1, **dadurch gekennzeichnet, dass** zur Ausübung des Druckimpulses (10) jeweils eine Beaufschlagung mit Impulsdruck (P₁₀) und nachfolgend eine zumindest teilweise Entlastung vom Impulsdruck (P₁₀), insbesondere vom im Wesentlichen gesamten Impulsdruck (P₁₀), erfolgt.

3. Verfahren nach Anspruch 2, **dadurch gekennzeichnet, dass** während der nachfolgenden Entlastung vom Impulsdruck (P₁₀) die Schmelzklebelackschichten (7) im Wesentlichen frei vom Druck (P) sind.

4. Verfahren nach einem der Ansprüche 1 bis 3, **dadurch gekennzeichnet, dass** die Zeitdauer der Beaufschlagung mit Impulsdruck (P₁₀) und/oder die nachfolgende Entlastung vom Impulsdruck (P₁₀) im Bereich von 0,1 bis 20, insbesondere von 0,5 bis 5, Sekunden liegt.

5. Verfahren nach einem der Ansprüche 1 bis 4, **dadurch gekennzeichnet, dass** der Druckimpuls (10) die Schmelzklebelackschichten (7) mit Impulsdruck (P₁₀) im Bereich von 0,5 bis 10 N/mm², insbesondere von 2 bis 6 N/mm², beaufschlagt.

6. Verfahren nach einem der Ansprüche 1 bis 5, **dadurch gekennzeichnet, dass** die erste Temperatur (temp1) im Bereich von 80 bis 220 °C, vorzugsweise 80 bis kleiner 180 °C, insbesondere von 100 bis 150 °C, liegt.

7. Verfahren nach einem der Ansprüche 1 bis 6, **dadurch gekennzeichnet, dass** das mehrmals durch den Druckimpuls (10) unter Druck (P) Setzen direkt nacheinander und/oder periodisch erfolgt.

8. Verfahren nach einem der Ansprüche 1 bis 7, **dadurch gekennzeichnet, dass** die Schmelzklebelackschichten (7) in einem ersten Zeitdauerabschnitt (11a) eines Druckverlaufs P(t) mehrmals durch den Druckimpuls (10) und in mindestens einem anderen Zeitdauerabschnitt (11b, 11c) des Druckverlaufs P(t) durch einen konstanten Druck (12b, 12c) unter Druck (P) gesetzt werden.

9. Verfahren nach Anspruch 8, **dadurch gekennzeichnet, dass** die Länge des anderen Zeitdauerabschnitts (11b, 11c) im Bereich von 0,5 bis 180, insbesondere von 60 bis 120, Sekunden ist.

10. Verfahren nach einem der Ansprüche 1 bis 9, **dadurch gekennzeichnet, dass** die Schmelzklebelackschichten (7) mehrmals durch den Druckimpuls (10) derart unter Druck (P) gesetzt werden, dass unter Vermeidung eines Ausquetschens von Klebstoff aus den Klebefugen (14) zwischen den Blechteilen (4) eine vollflächige Verklebung erfolgt.

11. Verfahren nach einem der Ansprüche 1 bis 10, **dadurch gekennzeichnet, dass** die zweite Temperatur (temp2) im Bereich von 180 °C bis 250 °C, insbesondere von 180 °C bis 220 °C, liegt.

12. Verfahren nach einem der Ansprüche 1 bis 11, **dadurch gekennzeichnet, dass** Blechteile (4) aufeinandergestapelt werden, die auf beiden ihrer Flachseiten (4a, 4b) die Schmelzklebelackschicht (7), insbesondere Backlackschicht, aufweisen.

13. Verfahren nach einem der Ansprüche 1 bis 12, **dadurch gekennzeichnet, dass** die Dicke jedes Blechteils (4) zwischen 0,09 und 0,49 mm, insbesondere 0,09 bis 0,29 mm, beträgt und/oder dass die Dicke der Schmelzklebelackschicht (7) jedes Blechteils (4) zwischen 2 und 12 µm, insbesondere von 4 bis 8 µm, beträgt.

14. Verfahren nach einem der Ansprüche 1 bis 13, **dadurch gekennzeichnet, dass** die Blechteile (4)
in einer Stapeleinrichtung (6) gestapelt,
nach Verlassen der Stapeleinrichtung (6) in Form eines, insbesondere vorverklebten, Blechpakets (2) deren Schmelzklebelackschichten (7) in einer Druckeinrichtung (9) mehrmals durch den Druckimpuls (10) unter Druck (P) gesetzt werden und nachfolgend
enderwärmt werden.

15. Verfahren nach einem der Ansprüche 1 bis 13, **dadurch gekennzeichnet, dass** folgende Verfahrensschritte in einer Druckeinrichtung (9) erfolgen:
einzelne Blechteile (4) zu einem Blechpaket (2) gestapelt,
deren Schmelzklebelackschichten (7) erwärmt,
mehrmals durch den Druckimpuls (10) unter Druck (P) gesetzt und
gegebenenfalls nachfolgend enderwärmt werden.
